# EUROPEAN PATENT APPLICATION

(11) **EP 3 979 120 A2**
(43) Date of publication of application: **06.04.2022**
(21) Application number: 21185446.8
(22) Date of filing: 13.07.2021
(51) Int. Cl.: G06F 30/15, G06F 30/28, G06F 111/08, G06F 119/14

(54) **PROBABILISTIC FATIGUE AND BLEND LIMIT ASSESSMENT AND VISUALIZATION METHODS FOR AIRFOILS**

(30) Priority: 30.09.2020 US 202063085430 P
(71) Applicant: General Electric Company, Schenectady, NY 12345 (US)
(72) Inventor: CHAKRABARTI, Suryarghya, Schenectady, 12345 (US); TURNER, Kevin, Schenectady, 12345 (US); CHOI, Yoon Seok, Schenectady, 12345 (US); WASHBURN, Douglas, Schenectady, 12345 (US); WANG, Liping, Schenectady, 12345 (US); BLAIR, Andrew, Schenectady, 12345 (US)
(74) Representative: Openshaw & Co.

(57) **Abstract**

A method of analyzing a blended airfoil that includes generating a plurality of simulated blended airfoil designs each including one of a plurality of blend geometries, training surrogate models representing the plurality of simulated blended airfoil designs based on natural frequency, modal force, and Goodman scale factors, determining a likelihood of operation failure of each of the plurality of blended airfoil designs in response to one or more vibratory modes, determining which of the plurality of simulated blended airfoil designs violate at least one aeromechanical constraint and generating, a blend parameter visualization including a blend design space, where the blend design space includes one or more restricted regions indicating blended airfoil designs where at least one aeromechanical constraint is violates and one or more permitted regions indicating blended airfoil designs where no aeromechanical constraints are violated.

## Description

### FEDERALLY SPONSORED RESEARCH STATEMENT

This invention was made with Government support under Contract No. FA865015D2501 awarded by the Department of the Air Force. The Government has certain rights in the invention.

### TECHNICAL FIELD

The present specification generally relates to analysis of airfoil design, including blended airfoils, and more specifically, to probabilistic methods of analyzing and modifying airfoil design.

### BACKGROUND

Current methods of assessing airfoil high cycle fatigue and airfoil blend limits are often overly conservative or overly permissive, causing unnecessary design constraints in some cases and unacceptable field failure rates in other cases. Accordingly, improved methods for analyzing airfoil blend limits and airfoil high cycle fatigue are desired to maximize design and repair flexibility while maintaining high levels of airfoil integrity.

### SUMMARY

Embodiments described herein are directed to methods of analyzing and visualizing airfoil blend limits as dictated by aeromechanical requirements and methods for probabilistic high cycle fatigue assessment on turbomachinery airfoils accounting for variation in airfoil geometry, systemic geometry, material strength, analysis methods and damping. Methods of analyzing high cycle fatigue on turbomachinery airfoils of the embodiments described herein use probabilistic techniques to analyze HCF using a single degree of freedom (SDOF) technique with a Monte Carlo simulation to generate percent of endurance limit (%EL) distributions for every vibratory mode of interest and use the simulation to generate an airfoil HCF model. After running this Monte Carlo simulation, the effect of one or more material property variations are used to provide a true probability distribution of HCF failure. This airfoil HCF model may be used to determine which the geometric features of the airfoil and the surrounding components of the jet engine which are driving variations in vibratory response. In some embodiments, the method may further use a Bayesian model calibration framework to provide the airfoil HCF model with test data in order to get better fleet level predictions of airfoil HCF.

In addition, to analyze airfoil blend limits, surrogate models are generated to predict the natural frequency and vibratory response of a blended airfoil based on one or more blend parameters, such as depth into the airfoil, radial location on the airfoil (i.e., location between the tip and the hub of the airfoil), and aspect ratio. As used herein, "surrogate model" refers to a model of a model and has been used in this document to capture other similar terms used in literature such as metamodels, response surface models or emulators. These surrogate models are then used to generate these outputs (e.g., natural frequency and vibratory response) over the entire blend design space. As used herein "blend design space" refers to the ranges of physical parameters of the airfoil that may be modified to blend out airfoil damage. Using the outputs of the surrogate models, a blend parameter visualization may be generated that includes restricted regions of the blend design space and permitted regions of the blend design space, where the restricted regions are regions of the blend design space which violate one or more aeromechanical constraints and the permitted regions are regions of the blend design space which do not violate one or more aeromechanical constraints. Thus, the permitted regions represent viable parameter alterations that may be performed to blend an airfoil during a maintenance and repair operation. In other words, the permitted regions depict the viable design space. In embodiments, the restricted regions are represented by shading in the blend parameter visualization and the permitted regions are unshaded in the blend parameter visualization. The blend parameter visualization enables a user to interactively update the constraints or assumptions on design variables and evaluate its effects on the allowable blend design space. The blend parameter visualization can also be expanded to a probabilistic chart accounting for variation in airfoil geometry, aerodynamic forcing, damping, mistuning amplification and material property variation. These can be used for more accurate reliability assessments and digital twin type applications. These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter described herein. The following detailed description of the illustrative embodiments can be understood when read in conjunction with the following drawings in which:
FIG. 1 schematically depicts a damaged airfoil before and after blending, according to one or more embodiments shown and described herein;
FIG. 2 depicts a flow chart showing a method of analyzing and visualizing airfoil blend limits, according to one or more embodiments shown and described herein;
FIG. 3A depicts a single mode blend parameter visualization, according to one or more embodiments shown and described herein;
FIG. 3B depicts a multi-mode blend parameter visualization, according to one or more embodiments shown and described herein;
FIG. 4 depicts a high level flow chart of a method of analyzing and visualizing airfoil blend limits, according to one or more embodiments shown and described herein;
FIG. 5 depicts a detailed version of the flow chart of FIG. 4, according to one or more embodiments shown and described herein;
FIG. 6 depicts a flow chart showing a probabilistic method of analyzing high cycle fatigue on airfoils, according to one or more embodiments shown and described herein;
FIG. 7 graphically depicts the probability of airfoil response to vibratory stress exceeding material capabilities of the airfoil, according to one or more embodiments shown and described herein;
FIG. 8 depicts a variance analysis for determining which geographic parameter of an airfoil drives airfoil response to vibratory stress, according to one or more embodiments shown and described herein;
FIG. 9 graphically depicts the relative contribution of high cycle fatigue response to different design variables, according to one or more embodiments shown and described herein;
FIG. 10 depicts Bayesian calibration probabilistic tuning vs. traditional regression analysis, according to one or more embodiments shown and described herein;
FIG. 11 graphically depicts the resultant endurance limit average using traditional regression analysis and Bayesian calibration probabilistic tuning, according to one or more embodiments shown and described herein;
FIG. 12A depicts a probabilistic blend parameter visualization, according to one or more embodiments shown and described herein; and
FIG. 12B depicts a grid point level analysis of the probabilistic blend parameter visualization of FIG. 12A, according to one or more embodiments shown and described herein.

### DETAILED DESCRIPTION

Damage to airfoils during regular jet engine operation is common. With integrally bladed rotors (e.g., blisks) it is expensive to discard an entire rotor due to airfoil damage. Instead, airfoils are often repaired by blending out the damage. However, blending changes the vibrational characteristics of the airfoil and may increase the high cycle fatigue (HCF) risk associated with the airfoil. Thus, limits are often placed on the region of the airfoil that can be blend repaired. These blend limits are typically based on legacy engine values rather than HCF calculations and therefore are often too conservative (in which case the blend limits are very restrictive) or not conservative enough in which case the likelihood of failure of the blended airfoil increases.

In addition, airfoil vibratory responses are subject to variation in forcing (from systemic geometrical parameters such as tip clearance, axial gap, as well as airfoil geometry variation (driven by manufacturing). Thus, the sensitivity of airfoil response may vary and may be vibratory mode-specific. Current high cycle fatigue assessment techniques rely on a deterministic design process that assesses only the nominal design and assigns a blanket design limit to account for these variations. However, these deterministic design limits can end up being too conservative for vibratory modes where less HCF variation is observed and non-conservative in extreme cases where geometry variation can drive too much scatter in HCF response. The former leads to overly constrained design requirements, which may be hard to meet or may lead to a sub-optimal aerodynamic design in order to meet the conservative aeromechanical requirements. The latter may lead to a risky design and unacceptable field failure rates. Accordingly, improved methods for analyzing airfoil blend limits and airfoil HCF are desired to maximize design and repair flexibility while maintaining high levels of airfoil integrity.

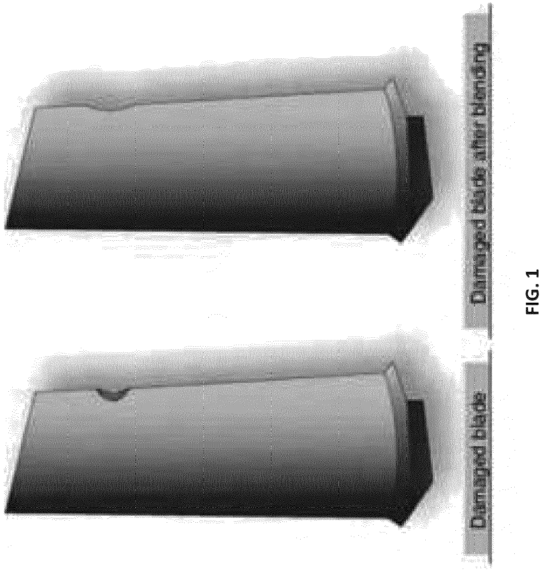

Referring now to FIG. 1, a damaged airfoil before and after blending is depicted. As shown in FIG. 1, the blending process smooths out the damage to minimize the likelihood of operational failure and breakdown of the blended airfoil. The blending may alter one or more parameters of the airfoils, such as local thickness, local width, and local radius. Blending may occur at different radial locations along the airfoil and may reach different depths into the airfoil. These geometric parameters may be modified within a blend design space, which are the ranges of physical parameters of the airfoil that may be modified to blend out airfoil damage. Using the methods described herein, the limits of the blend design space may be determined to maximize the potential alterations that may be performed during a blend and maximize performance of the blended airfoil. In particular, changes in physical dimensions of the airfoil during blending alter the natural frequency and vibratory response of the airfoil and the methods herein provide an efficient, cost effective way to determine either changes in vibratory response and natural frequency induced by dimensional changes of a particular airfoil blend are operationally permissible.

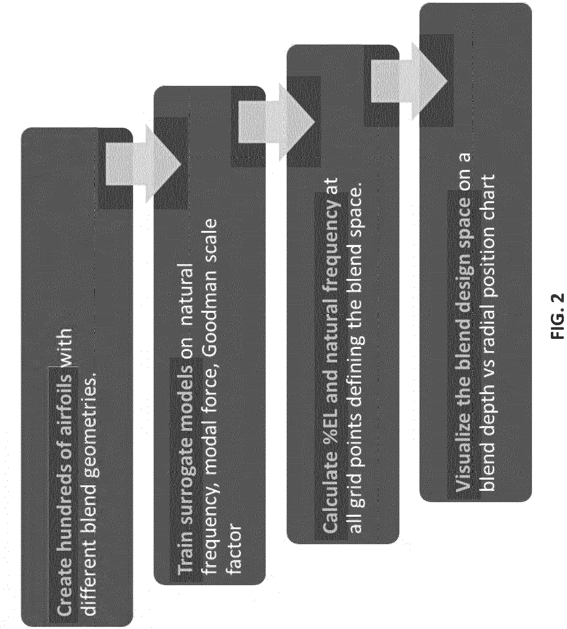

Referring now to FIG. 2, a flowchart is depicted showing an embodiment of the method of analyzing and visualizing airfoil blend limits. The method first includes simulating a plurality of airfoil designs (e.g., hundreds of simulations or more) having a variety of different blend geometries and using these simulations to train surrogate models with respect to three aeromechanical properties (natural frequency, modal force and Goodman scale factors) as a function of blend parameters. The surrogate models are trained on these properties by designing and analyzing hundreds (or more) blended airfoils using an automated, regression process, such as neural net modeling. Once the surrogate models are trained, the method next includes analyzing the aeromechanical risk (i.e., the likelihood of operational failure) of any blended airfoil in terms of natural frequencies or vibratory response (represented by percent of endurance limits) which can be calculated using the single degree of freedom (SDOF) equation.

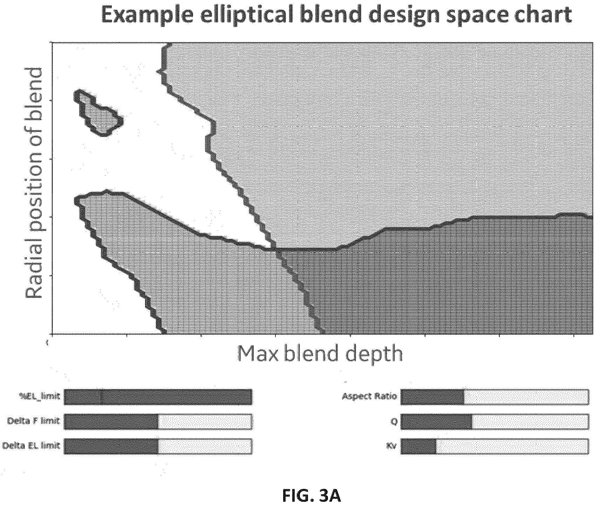

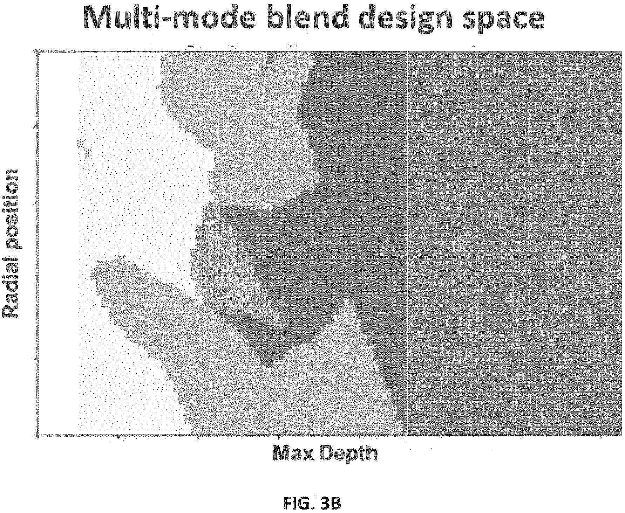

Indeed, this analysis can be performed at a number of vibratory modes. This allows the model to be exercised over the entire blend design space and facilitates the formation of a blend parameter visualization, examples of which are shown in FIGS. 3A and 3B, which visualize the resultant design region where one or more airfoil blend limits are violated. The method of analyzing and visualizing airfoil blend limits eliminates the need for separate case specific aeromechanical assessments (i.e., MRB assessments). Instead, a proposed blend that is not initially conforming can be located spotted on the design space chart to assess the acceptability of the proposed blend. The method of analyzing and visualizing airfoil blend limits described herein generate aeromechanical blend limits that are grounded in physics, in contrast to previous, legacy based techniques. In addition, the blend limits determined with the techniques described herein ae potentially less restrictive than previous techniques, which may increase the situations in which an cheaper airfoil blend repair is implemented instead of a more expensive replacement.

Referring now to FIGS. 3A and 3B, two example blend parameter visualizations are shown. FIG. 3A depicts a single mode blend parameter visualization and FIG. 3B depicts a multi-mode blend parameter visualization. The blend parameter visualization is an interactive chart to visualize the blend design space on the fly with shaded regions indicating at least one aeromechanical constraints has been violated. Other design variables (damping, mistuning amplification, blend aspect ratio) can be updated interactively along with the constraints on outputs to enable an engineer to check sensitivities and exercise engineering judgement while setting blend limits. Design spaces for multiple vibratory modes can be combined to generate a single chart which shows the blend region which would be allowable for all vibratory modes. Moreover, the methods of analyzing airfoil blend limited by visualizing airfoil blend design space are primarily focused on two aeromechanical requirements - change in natural frequency and change in vibratory response within certain allowable bounds. In some cases the absolute vibratory response may also be considered.

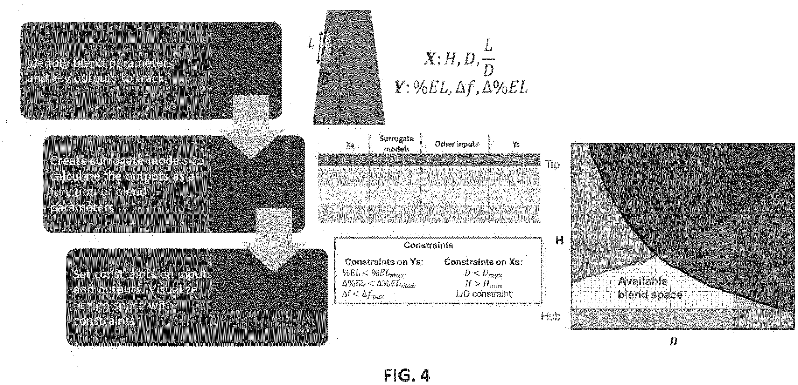

Referring now to FIG. 4, a high level flow chart of the method of analyzing and visualizing airfoil blend limits is shown together with another example blend parameter visualization and a schematic airfoil. As shown in FIG. 4, the method may first include identifying blend parameters ("X") and outputs ("Y") to track. In FIG. 4, the blend parameters include the radial location of the blend location between the tip and the hub of the airfoil (H in the example blend parameter visualization), the depth of the blend, (D in the example blend parameter visualization), and the aspect ratio of the blend, which is the length of the blend L over the depth of the blend D, i.e., L/D. Radial location H, blend depth D, and blend length L are all shown in the schematic airfoil of FIG. 4. It should be understood that this parameterization is specific to elliptical blends. Other types of blends such as a J-cut, or a tip crop can be parameterized using a different set of parameters and blend parameter visualizations may also be generated for these different sets of parameters.

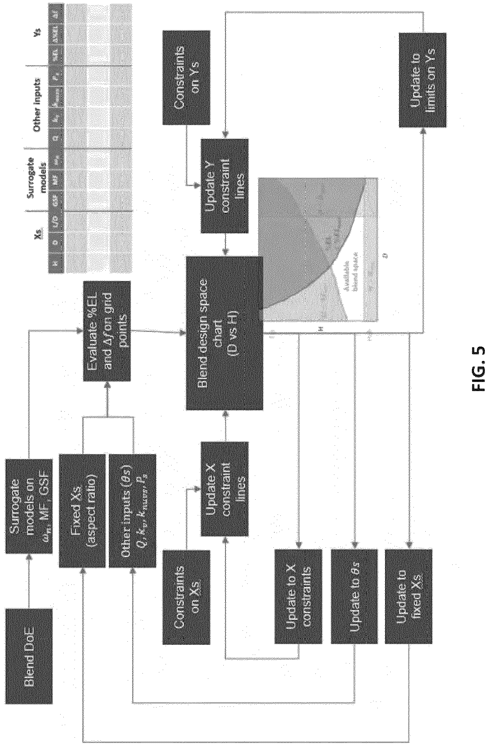

Next, the method includes creating surrogate models to calculate the outputs Y as a function of blend parameters X. The surrogate models analyze the natural frequency, modal force and Goodman scale factors based on the blend parameters to determine the outputs Y, which include change in natural frequency from original airfoil design (Δf), endurance limit (%EL), and change in endurance limit from original airfoil design (Δ%FL). Additional design variables that may be analyzed by the surrogate model include damping (Q), mistuning amplification (Kv), the non-uniform vane spacing factor (Knuvs), and the aero-scaling factor to scale from aero conditions to crossing (Ps). Next, the method includes setting constraints on the inputs (i.e., the blend parameters X) and the outputs Y. Example input constraints include a depth constraint D<Dₘₐₓ, a radial location constraint H>Hmin, and an aspect ratio constraint. Example output constraints include %EL<%ELmax, Δ%EL< Δ%ELₘₐₓ, and Δf< Δfₘₐₓ. These constraints are depicted in the example blend parameter visualization of FIG. 4, in which the shaded regions (i.e., restricted regions) violate at least one constraint and the unshaded region (i.e., permitted regions) show the available blend space. In operation, a damaged airfoil may be blended with any of the blend parameters within the available blend space to repair the damaged airfoil (i.e., blending the damaged airfoil). Moreover, the blend parameter visualization may be interactive, allowing a user to individually adjust blend parameters, additional design variables, input constraints, and output constraints. FIG. 5 shows the method of analyzing and visualizing airfoil blend limits described with respect to FIG. 4 in more detail.

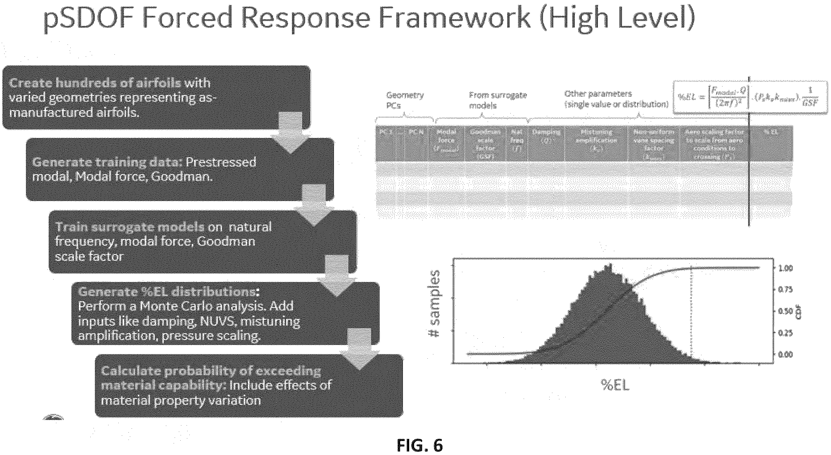

Referring now to FIG. 6, a flow chart showing a probabilistic method of analyzing high cycle fatigue on airfoils is depicted. The method first includes generating hundreds of simulated airfoils with varied geometries representing a variety of as-manufactured airfoils (i.e., airfoils having a variety of dimensional combinations) and then generating training data regarding prestressed modals, modal forces, and Goodman scale factors. The simulated airfoil designs and training data may be generated using Monte Carlo simulations. Next, surrogate models may be trained based on three scalar parameters - natural frequency, modal force, and Goodman scale factor. Once the surrogate model are trained, endurance limit (%EL) distributions may be generated using a Monte Carlo analysis based on the dimensional properties of the simulated airfoils, the ranges of the three scalar factors, and ranges of additional inputs such as damping, non-uniform vane spacing, mistuning amplification, and pressure scaling. Once the endurance limit distributions are generated, the probability of exceeding material capabilities of the airfoils may be determined probabilistically accounting for the effects of material property variations to generate a probability distribution of HCF failure. The endurance limit distributions may be used to generate an airfoil HCF model to determine how different material property variations effect vibratory stress. This probabilistic assessment can solve the issues of over and under constraint of design requirement that may arise when using deterministic design limits, by performing the assessment on a vibratory mode-specific basis and calculating a probability of failure for every vibratory mode of interest.

Designing airfoils based on a probabilistic assessment facilitates the manufacture of better performing airfoils, while requiring fewer design iterations to form an early understanding of the effects of design decisions on component failure rate. Furthermore, the probabilistic method of analyzing high cycle fatigue on airfoils described herein is based on the SDOF forced response model which captures of effects of airfoil and systemic geometry variation through only three scalar parameters - natural frequency, modal force, and Goodman scale factor. This allows for establishing simplified workflows well-suited for use in an industrial setting under time-constrained design cycles and may reduce design cycle time due to less redesign driven by less restrictive requirements. The probabilistic techniques lead to fewer design practice deviations than previous deterministic techniques. Design practice deviations typically require an individual analysis, reducing manufacturing efficiency. The probabilistic techniques also reduce the number of separate case specific aeromechanical assessments (i.e., MRB assessments). Moreover, the analysis of variances in airfoil response facilitated by the methods described herein increase understanding of the key geometric parameters driving variation in response which may improve airfoil design. In other words, airfoil HCF models may be used to determine which the geometric features of the airfoil and the surrounding components of the jet engine which are driving variations in vibratory response, forming a better understanding of what geometric feature drive failure rate and a more precise understanding of the geometric tolerances, which may lead to less restrictive aeromechanical requirements and more optimally performing airfoils. Indeed, the probabilistic method of analyzing high cycle fatigue on airfoils may further include to manufacturing an airfoil comprising an airfoil geometry having a likelihood of high cycle fatigue failure below a failure threshold, where the failure threshold is based on a threshold endurance limit of the airfoil geometry.

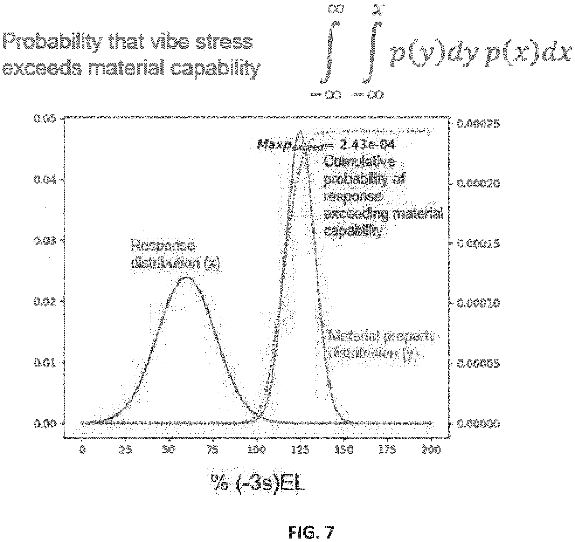

Referring now to FIG. 7, the probability of airfoil response to vibratory stress exceeding material capabilities of the airfoil is graphically depicted. FIG 7 depicts the vibratory response distribution of the airfoil as a function of the -3 sigma material capability. The material HCF capability probability distribution is also plotted on the same chart. This can be constructed from material fatigue test databases which record variation in material capability. The quantity of interest is the probability of the airfoil vibratory response exceeding the material capability which is calculated using the equation shown in FIG 7. The probability of the airfoil vibratory response exceeding the material capability may be used to determine and set the threshold endurance limit of the airfoil geometry.

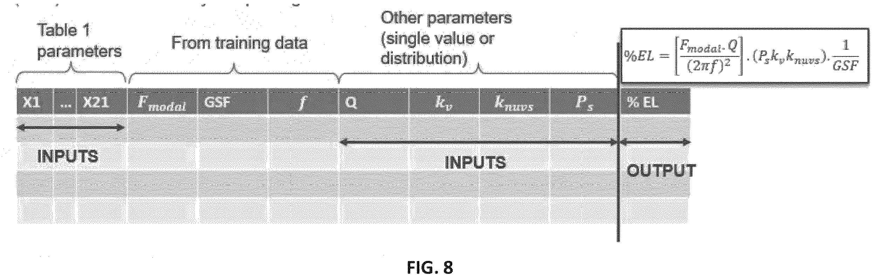

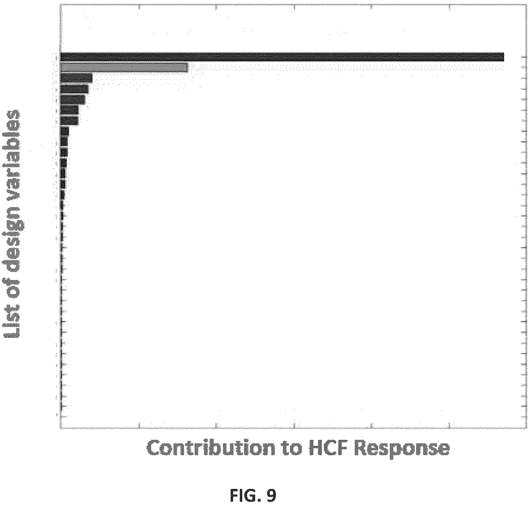

FIG. 8 depicts a variance analysis for determining which geographic parameter of an airfoil drives airfoil response to vibratory stress. This calibrated model can then be used to provide blisk-specific reliability estimates when the measured airfoil geometries of the blisk are fed in. Such blisk-specific estimates can be rolled up across the fleet to obtain a fleet-level (e.g., global) reliability estimate for the part. Moreover, FIG. 9 shows an example of the relative contribution of high cycle fatigue response to different design variables. As shown by FIG. 9, certain design variables may have a disproportionate impact on high cycle fatigue response. Using the methods described herein, these disproportionately impactful design variables may be identified, facilitating improved airfoil design.

One issue that is often faced in predicting airfoil vibratory response is a disconnect between analytical predictions and responses observed in a rig or engine test. In these situations, the analytical models are rendered useless after the test and the test responses are used directly to certify the part. However, this approach assumes that the tested part is representative of all manufactured parts which may not be true Referring again to FIG. 8, a Bayesian model calibration approach can use the test data to help calibrate uncertain parameters in the physics-based model described herein and fills gaps in the physics-based model by providing a discrepancy model (which bridges the gap between observed data and a calibrated model). The Bayesian model calibration approach provides the probabilistic airfoil HCF model with test data in order to get better fleet level predictions of airfoil HCF. These calibrated predictions can be used for more accurate reliability assessments and digital twin type applications. Without intending to be limited by theory, a digital twin is a digital replica of a physical entity. That is, a digital twin is a digital version of a machine (also referred to as an "asset"). Once created, the digital twin can be used to represent the machine in a digital representation of a real world system. The digital twin is created such that it computationally mirrors the behavior of the corresponding machine. Additionally, the digital twin may mirror the state of the machine within a greater system. For example, sensors may be placed on the machine (e.g., an airfoil) to capture real-time (or near real-time) data from the physical object to relay it back to a remote digital twin. The digital twin can then make any changes necessary to maintain its correspondence to the twinned asset, providing operations instruction, diagnostics, insight to unmeasurable internal physical dynamics, insight to efficiencies and reliability.

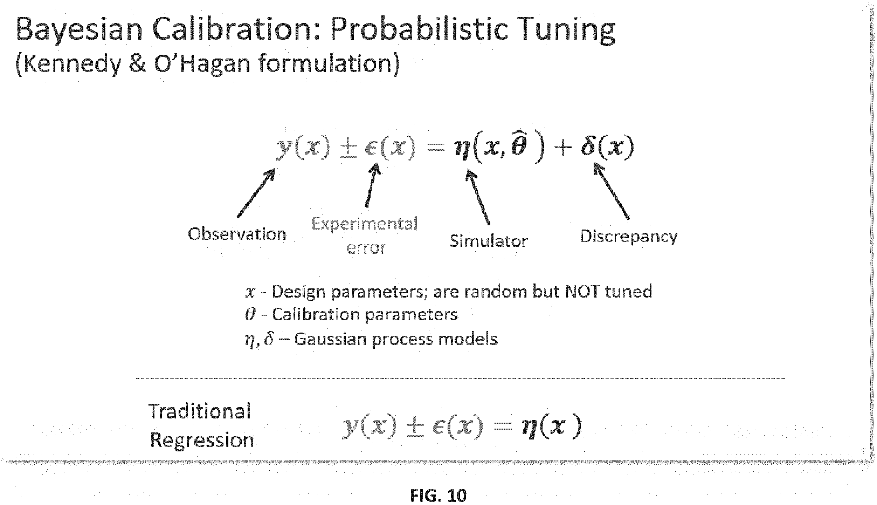

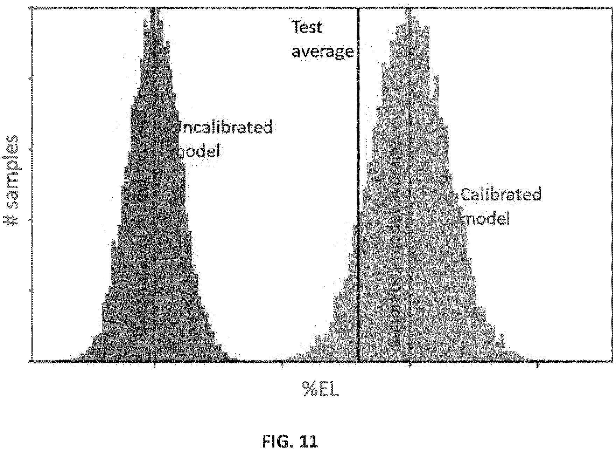

FIG. 10 depicts Bayesian calibration probabilistic tuning vs. traditional regression analysis and FIG. 11 graphically depicts the resultant endurance limit average using traditional regression analysis (titled "uncalibrated model" in FIG. 11) and Bayesian calibration probabilistic tuning (titled "calibrated model" in FIG. 11). FIG. 11 show the average endurance limit of their respective models and the real-world test average of the endurance limit. As shown in FIG. 11, the Bayesian calibration probabilistic tuning generates a modeled average endurance limit (eg., "calibrated modeled average") that is much closer to the test average than the modeled endurance limit generated using traditional regression analysis (titled "uncalibrated model average").

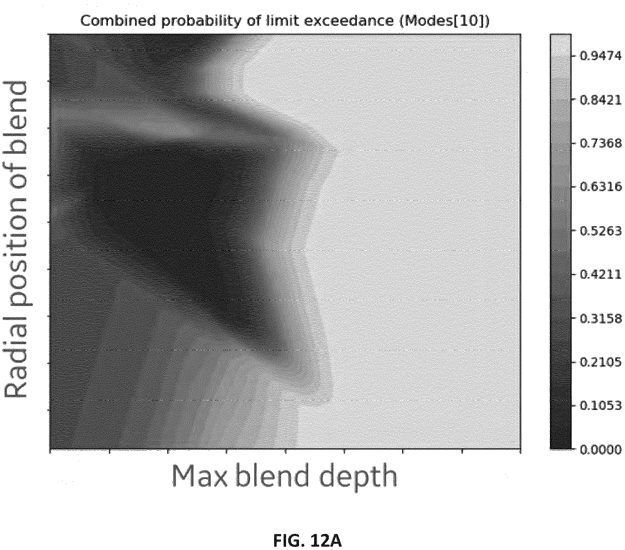

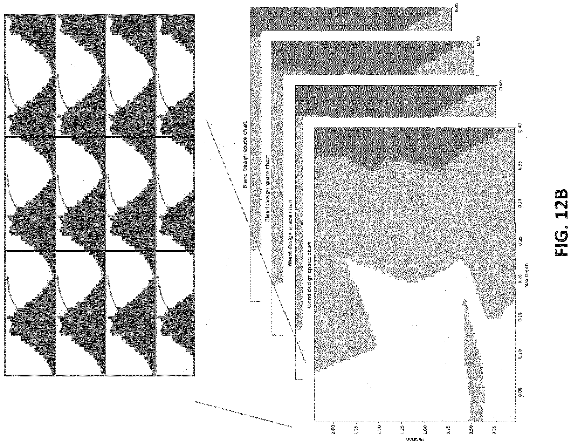

Referring now to FIGS. 12A and 12B, in some embodiments, the probabilistic techniques used to analyze high cycle fatigue on airfoils described above may also be incorporated into the methods of generating blend parameter visualizations of blend limits. FIG. 12A depicts a probabilistic blend parameter visualization. Probabilistic blend parameter visualizations may consider variations in damping, mistuning amplification factors, airfoil geometry, aerodynamic forcing and material properties. The probabilistic design space is represented in terms of probability of exceedance on each aeromechanical constraint and the combined probability of reaching the blend limit. FIG. 12B shows a grid point level analysis of the probabilistic blend parameter visualization. This allows a user to see a detailed breakdown of the probability of exceeding blend limits on each parameter point on the probabilistic blend parameter visualization.

Each of the methods described herein may be implemented on a computer system including at least a processor and a non-transitory, computer-readable medium that includes programming instructions stored thereon that are executable by the processor. Further, any of the components may be implemented in a single computer system, distributed across multiple computer systems, or using cloud computing resources. Some non-limiting examples of computer systems include laptops, desktops, smartphone devices, tablets, PCs, cloud computing platforms, or the like. Various cloud computing platforms are well-known and available under product names including, but not limited to Amazon Web Services, Google Cloud Platform, Microsoft Azure, and IBM Bluemix. The techniques described herein may be implemented using computer readable instructions stored on the non-transitory computer-readable media such that, when executed by a processor, the computer readable instructions cause the processor to perform any of the functions described in the disclosed embodiments. A person of ordinary skill in the art will understand what computer systems, processors, or memory may be used in the disclosed embodiments.

The computer network may include one or more of a personal area network, a local area network, grid computing network, wide area network, cellular networks, satellite networks, the internet, a virtual network in a cloud computing environment, and/or any combinations thereof. Suitable local area networks may utilize wired Ethernet, wireless technologies such as, for example, wireless fidelity (Wi-Fi), and/or virtual network resources in a cloud computing environment. Suitable personal area networks may utilize wireless technologies such as, for example, IrDA, Bluetooth, Wireless USB, Z-Wave, ZigBee, and/or other near field communication protocols. Suitable personal area networks may utilize wired computer buses such as, for example, USB, Serial ATA, eSATA, and FireWire. Suitable cellular networks include, but are not limited to, technologies such as LTE, WiMAX, UMTS, CDMA, and GSM. Accordingly, the one or more computer networks can be utilized as a wireless access point to access one or more servers implementing the processes described herein.

Moreover, the computing systems may include a modelling component configured to use one or more models to generate one or more custom probability distributions. The models may include quantitative models, statistical models, simulation models, machine learning models, or artificial intelligence models. According to some embodiments, the modelling component uses one or more machine learning models, trained on the historical operations data, to generate the custom probability distributions. Machine learning models may include but are not limited to Neural Networks, Linear Regression, Logistic Regression, Decision Tree, SVM, Naive Bayes, kNN, K-Means, Random Forest, Dimensionality Reduction Algorithms, or Gradient Boosting algorithms, and may employ learning types including but not limited to Supervised Learning, Unsupervised Learning, Reinforcement Learning, Semi-Supervised Learning, Self-Supervised Learning, Multi-Instance Learning, Inductive Learning, Deductive Inference, Transductive Learning, Multi-Task Learning, Active Learning, Online Learning, Transfer Learning, or Ensemble Learning.

Each custom probability distribution may correspond to a variable that used in simulating or analyzing airfoil design and vibratory response. A simulation component may be implemented in the computing system. The simulation component is configured to simulate airfoil vibratory response using custom probability distributions. The simulation component may use a multivariate model to identify and characterize interactions between the various parameters and operational components. Using the multivariate model, the simulation component models not only the behavior of the parameters and operational components, but the complex interactions between the parameters and operational components.

It should now be understood that the embodiments described herein are directed to methods of analyzing and visualizing airfoil blend limits as dictated by aeromechanical requirements and methods for probabilistic high cycle fatigue assessment on turbomachinery airfoils accounting for variation in airfoil geometry, systemic geometry, material strength, analysis methods and damping. While particular embodiments have been illustrated and described herein, it should be understood that various other changes and modifications may be made without departing from the spirit and scope of the claimed subject matter.

Further aspects of the invention are provided by the subject matter of the following clauses:
1. A method of analyzing a blended airfoil, the method comprising
   generating, using a computing system, a plurality of simulated blended airfoil designs, each comprising one of a plurality of blend geometries;
   training, using the computing system, surrogate models representing the plurality of simulated blended airfoil designs based on at least one of natural frequency, modal force, and Goodman scale factors;
   determining, using the computing system, a likelihood of operation failure of each of the plurality of blended airfoil designs in response to one or more vibratory modes;
   determining, using the computing system, which of the plurality of simulated blended airfoil designs violate at least one aeromechanical constraint;
   generating, using the computing system, a blend parameter visualization comprising a blend design space, wherein the blend design space comprises one or more restricted regions indicating blended airfoil designs where at least one aeromechanical constraint is violated and one or more permitted regions indicating blended airfoil designs where no aeromechanical constraints are violated; and
   providing, by the computing system, the blend parameter visualization to an external system for use in blending a damaged airfoil.
2. The method of any preceding clause, further comprising blending the damaged airfoil based on a simulated blended airfoil design located in the one or more permitted regions of the blend design space.
3. The method of any preceding clause, wherein the blend design space comprises at least two blend parameters.
4. The method of any preceding clause, wherein the first blend parameter comprises a radial location of the blend between a tip and a hub of the blended airfoil.
5. The method of any preceding clause, wherein the blend parameter visualization is interactive such that the at least one aeromechanical constraint and the at least two blend parameters are adjustable.
6. The method of any preceding clause, wherein determining which of the plurality of simulated blended airfoil designs violate at least one aeromechanical constraint is a probabilistic determination and the blend design space of the blend parameter visualization comprises a probabilistic restricted regions and probabilistic permitted regions.
7. The method of any preceding clause, wherein the plurality of simulated blended airfoil designs are generated using a Monte Carlo simulation.
8. The method of any preceding clause, wherein the surrogate models representing the plurality of simulated blended airfoil designs are further trained based on damping, mistuning amplification, a non-uniform vane spacing factor, and an aero-scaling factor to scale from aero conditions to crossing.
9. The method of any preceding clause, wherein the at least one aeromechanical constraint is based on a change in natural frequency from an original airfoil design, an endurance limit, and a change in the endurance limit from the original airfoil design.
10. The method of any preceding clause, wherein the blend parameter visualization comprises the blend design space for a single vibratory mode.
11. The method of any preceding clause, wherein the blend parameter visualization comprises the blend design space for a plurality of vibratory modes.
12. A method of analyzing high cycle fatigue of an airfoil, the method comprising
   generating, using a computing system, a plurality of simulated airfoil designs, each comprising one of a plurality of airfoil geometries;
   training, using the computing system, surrogate models representing the plurality of simulated airfoil designs based on at least one of natural frequency, modal force, and Goodman scale factors;
   generating, using the computing system, a probabilistic distribution of a likelihood of high cycle fatigue failure of each of the plurality of airfoil designs in response to one or more vibratory modes;
   determining, using the computing system, a relative impact of each of a plurality of geometrical parameters of the plurality of airfoil geometries on the high cycle fatigue of the plurality of airfoil designs; and
   providing, by the computing system, data corresponding to the relative impact to an external device for the purposes of manufacturing an airfoil.
13. The method of any preceding clause, further comprising manufacturing the airfoil comprising an airfoil geometry having a likelihood of high cycle fatigue failure below a failure threshold.
14. The method of any preceding clause, wherein the failure threshold is based on a threshold endurance limit of the airfoil geometry.
15. The method of any preceding clause, wherein the plurality of simulated blended airfoil designs are generated using a Monte Carlo simulation.
16. The method of any preceding clause, wherein the surrogate models representing the plurality of simulated blended airfoil designs are further trained based on damping, mistuning amplification, a non-uniform vane spacing factor, and an aero-scaling factor to scale from aero conditions to crossing.
17. The method of any preceding clause, further comprising calibrating the probabilistic distribution of a likelihood of high cycle fatigue failure using Bayesian calibration probabilistic tuning.
18. The method of any preceding clause, the likelihood of high cycle fatigue failure is based on an endurance limit of the airfoil geometry.
19. A system, comprising:
   a processor; and
   a non-transitory, processor-readable storage medium comprising one or more programming instructions thereon that, when executed, cause the processor to:
      generate a plurality of simulated blended airfoil designs, each comprising one of a plurality of blend geometries;
      train surrogate models representing the plurality of simulated blended airfoil designs based on at least one of natural frequency, modal force, and Goodman scale factors;
      determine a likelihood of operation failure of each of the plurality of blended airfoil designs in response to one or more vibratory modes;
      determine which of the plurality of simulated blended airfoil designs violate at least one aeromechanical constraint;
      generate a blend parameter visualization comprising a blend design space, wherein the blend design space comprises one or more restricted regions indicating blended airfoil designs where at least one aeromechanical constraint is violated and one or more permitted regions indicating blended airfoil designs where no aeromechanical constraints are violated; and
      provide the blend parameter visualization to an external system for use in blending a damaged airfoil.
20. A system, comprising:
   a processor; and
   a non-transitory, processor-readable storage medium comprising one or more programming instructions thereon that, when executed, cause the processor to:
      generate a plurality of simulated airfoil designs, each comprising one of a plurality of airfoil geometries;
      train surrogate models representing the plurality of simulated airfoil designs based on at least one of natural frequency, modal force, and Goodman scale factors;
      generate a probabilistic distribution of a likelihood of high cycle fatigue failure of each of the plurality of airfoil designs in response to one or more vibratory modes;
      determine a relative impact of each of a plurality of geometrical parameters of the plurality of airfoil geometries on the high cycle fatigue of the plurality of airfoil designs; and
   provide data corresponding to the relative impact to an external device for the purposes of manufacturing an airfoil.

## Claims

1. A method of analyzing a blended airfoil, the method comprising
generating, using a computing system, a plurality of simulated blended airfoil designs, each comprising one of a plurality of blend geometries;
training, using the computing system, surrogate models representing the plurality of simulated blended airfoil designs based on at least one of natural frequency, modal force, and Goodman scale factors;
determining, using the computing system, a likelihood of operation failure of each of the plurality of blended airfoil designs in response to one or more vibratory modes;
determining, using the computing system, which of the plurality of simulated blended airfoil designs violate at least one aeromechanical constraint;
generating, using the computing system, a blend parameter visualization comprising a blend design space, wherein the blend design space comprises one or more restricted regions indicating blended airfoil designs where at least one aeromechanical constraint is violated and one or more permitted regions indicating blended airfoil designs where no aeromechanical constraints are violated; and
providing, by the computing system, the blend parameter visualization to an external system for use in blending a damaged airfoil.

2. The method of claim 1, further comprising blending the damaged airfoil based on a simulated blended airfoil design located in the one or more permitted regions of the blend design space.

3. The method of claim 1 or 2, wherein the blend design space comprises at least two blend parameters.

4. The method of claim 3, wherein a first blend parameter comprises a radial location of the blend between a tip and a hub of the blended airfoil.

5. The method of claim 3 or 4, wherein the blend parameter visualization is interactive such that the at least one aeromechanical constraint and the at least two blend parameters are adjustable.

6. The method of any preceding claim, wherein determining which of the plurality of simulated blended airfoil designs violate at least one aeromechanical constraint is a probabilistic determination and the blend design space of the blend parameter visualization comprises a probabilistic restricted regions and probabilistic permitted regions.

7. The method of any preceding claim, wherein the plurality of simulated blended airfoil designs are generated using a Monte Carlo simulation.

8. The method of any preceding claim, wherein the surrogate models representing the plurality of simulated blended airfoil designs are further trained based on damping, mistuning amplification, a non-uniform vane spacing factor, and an aero-scaling factor to scale from aero conditions to crossing.

9. The method of any preceding claim, wherein the at least one aeromechanical constraint is based on a change in natural frequency from an original airfoil design, an endurance limit, and a change in the endurance limit from the original airfoil design.

10. The method of any preceding claim, wherein the blend parameter visualization comprises the blend design space for a single vibratory mode.

11. The method of any of claims 1 to 9, wherein the blend parameter visualization comprises the blend design space for a plurality of vibratory modes.

12. A method of analyzing high cycle fatigue of an airfoil, the method comprising
generating, using a computing system, a plurality of simulated airfoil designs, each comprising one of a plurality of airfoil geometries;
training, using the computing system, surrogate models representing the plurality of simulated airfoil designs based on at least one of natural frequency, modal force, and Goodman scale factors;
generating, using the computing system, a probabilistic distribution of a likelihood of high cycle fatigue failure of each of the plurality of airfoil designs in response to one or more vibratory modes;
determining, using the computing system, a relative impact of each of a plurality of geometrical parameters of the plurality of airfoil geometries on the high cycle fatigue of the plurality of airfoil designs; and
providing, by the computing system, data corresponding to the relative impact to an external device for the purposes of manufacturing an airfoil.

13. The method of claim 12, further comprising manufacturing the airfoil comprising an airfoil geometry having a likelihood of high cycle fatigue failure below a failure threshold.

14. A system, comprising:
a processor; and
a non-transitory, processor-readable storage medium comprising one or more programming instructions thereon that, when executed, cause the processor to:
generate a plurality of simulated blended airfoil designs, each comprising one of a plurality of blend geometries;
train surrogate models representing the plurality of simulated blended airfoil designs based on at least one of natural frequency, modal force, and Goodman scale factors;
determine a likelihood of operation failure of each of the plurality of blended airfoil designs in response to one or more vibratory modes;
determine which of the plurality of simulated blended airfoil designs violate at least one aeromechanical constraint;
generate a blend parameter visualization comprising a blend design space, wherein the blend design space comprises one or more restricted regions indicating blended airfoil designs where at least one aeromechanical constraint is violated and one or more permitted regions indicating blended airfoil designs where no aeromechanical constraints are violated; and
provide the blend parameter visualization to an external system for use in blending a damaged airfoil.

15. A system, comprising:
a processor; and
a non-transitory, processor-readable storage medium comprising one or more programming instructions thereon that, when executed, cause the processor to:
generate a plurality of simulated airfoil designs, each comprising one of a plurality of airfoil geometries;
train surrogate models representing the plurality of simulated airfoil designs based on at least one of natural frequency, modal force, and Goodman scale factors;
generate a probabilistic distribution of a likelihood of high cycle fatigue failure of each of the plurality of airfoil designs in response to one or more vibratory modes;
determine a relative impact of each of a plurality of geometrical parameters of the plurality of airfoil geometries on the high cycle fatigue of the plurality of airfoil designs; and
provide data corresponding to the relative impact to an external device for the purposes of manufacturing an airfoil.
